# EUROPÄISCHE PATENTSCHRIFT

(11) **EP 1 734 024 B1**
(45) Veröffentlichungstag und Bekanntmachung des Hinweises auf die Patenterteilung: **10.08.2016**
(21) Anmeldenummer: 06114927.4
(22) Anmeldetag: 02.06.2006
(51) Int. Cl.: C04B 35/80, C04B 35/111

(54) **Oxidkeramischer Faser-Verbundwerkstoff und ein Verfahren zur Herstellung desselben**
Oxide ceramic fibre - composite material and a process for producing the same
Composite en céramique à base d'oxydes renforcés par des fibres et un procédé pour fabriquer lemême

(30) Priorität: 14.06.2005 DE 102005027560
(43) Veröffentlichungstag der Anmeldung: 20.12.2006
(73) Patentinhaber: Deutsches Zentrum für Luft- und Raumfahrt e.V., 51147 Köln (DE)
(72) Erfinder: Kanka, Bernd, 51465, Bergisch Gladbach (DE)
(74) Vertreter: dompatent von Kreisler Selting Werner - Partnerschaft von Patent- und Rechtsanwälten mbB

(56) Entgegenhaltungen:
- DE-A1- 19 623 425
- DE-A1- 19 826 792
- KANKA B ET AL: "Aluminosilicate fiber/mullite matrix composites with favorable high-temperature properties" JOURNAL OF THE EUROPEAN CERAMIC SOCIETY, ELSEVIER SCIENCE PUBLISHERS, BARKING, ESSEX, GB, Bd. 20, Nr. 5, Mai 2000 (2000-05), Seiten 619-623, XP004193040 ISSN: 0955-2219
- H. SCHNEIDER ET AL.: "Porous alumino silicate fiber/mullite matrix composites" CERAMIC TRANSACTIONS, Bd. 115, 2000, Seiten 414-434, XP009071836
- SCHMUCKER M ET AL: "Temperature-induced fibre/matrix interactions in porous alumino silicate ceramic matrix composites" JOURNAL OF THE EUROPEAN CERAMIC SOCIETY, ELSEVIER SCIENCE PUBLISHERS, BARKING, ESSEX, GB, Bd. 20, Nr. 14-15, Dezember 2000 (2000-12), Seiten 2491-2497, XP004224339 ISSN: 0955-2219
- GORING JÜRGEN ET AL.: "A potential oxide/oxide ceramic matrix composite for gas turbine appplications" PROCEEDINGS OF THE ASME TURBO EXPO 2003, Bd. 1, 2003, Seiten 621-624, XP009071827

## Beschreibung

Die Erfindung betrifft ein besonders kostengünstiges und flexibles Verfahren zur Herstellung eines gesinterten, keramischen Faser-Verbundwerkstoffes aus oxidkeramischen Endlosfasern im Verbund mit einer oxidkeramischen Matrix.

Oxidkeramiken haben prinzipiell ein hohes Anwendungspotential sowohl als Strukturwerksto.ffe als auch zum thermischen Schutz von Brennkammern und für heißgasleitende Komponenten in Flugzeugtriebwerken und in stationären Gasturbinen. Hier treten Temperaturen von mehr als 1200 °C sowie thermomecharnische Materialbelastungen durch schnelle Temperaturwechsel und lokale thermische Beaufschlagung auf.

Derzeitige oxidkeramische Faser-Verbundwerkstoffe für den ingenieurmäßigen Einsatz unter extremen thermischen Bedingungen wie beispielsweise in Gasturbinen sind entweder nur sehr aufwendig herzustellen oder weisen bei geringerem Produktionsaufwand nur unzureichende mechanische Eigenschaften auf. Problematisch ist dabei vor allem die Schrumpfung der Matrix während der Trocknung und des Sinterprozesses aufgrund des niedrigen Feststoffgehaltes im eingesetzten Schlicker.

Monolithische Oxidkeramiken sind aufgrund ihrer Sprödigkeit für den technischen Hochtemperatureinsatz in sicherheitsrelevanten Fällen ungeeignet. Daher werden seit den 90er Jahren weltweit Anstrengungen unternommen, oxidkeramische Werkstoffe mit schadenstolerantem, also quasiduktilem Verhalten zu entwickeln. Eine praktikable Möglichkeit, Keramikwerkstoffe mit ausreichender "Zähigkeit" herzustellen, liegt in der Verstärkung durch keramische Fasern, obwohl beide Komponenten für sich genommen, also keramische Faser und Matrix, inhärent spröde sind. Diese bekannten Materialien werden aus Verfahren erhalten, bei denen der Schlicker üblicherweise einen maximalen Feststoffgehalt von etwa 45 Gew.% aufweist.

Derzeitige oxidkeramische Faser-Verbundwerkstoffe mit ausreichenden mechanischen Eigenschaften für den ingenieurmäßigen Einsatz unter extremen thermischen Bedingungen, wie beispielsweise der keramische Werkstoff WHIPOX^{®} (wound highly porous oxide ceramic matrix composite, DE 198 26 792 C2), basieren auf kontinuierlichen, oxidkeramischen Fasern oder Geweben der Firmen 3M (Nextel^{®} 610 und Nextel^{®} 720) oder Nivity Company Ltd, Tokyo, Japan (R-960D). Der hohe Preis dieser Aluminumsilikat- oder Aluminiumoxidfasern bestimmt dabei in hohern Maße den Preis des hieraus hergestellten keramischen Komposits, da der - Faservolumenanteil herstellungsbedingt üblicherweise mehr als 30 Vol.% beträgt.

Es werden oxidkeramische Faser-Verbundwerkstoffe in verschiedenen Forschungseinrichtungen und Firmen intensiv entwickelt und präsentiert, die sich vor allem durch extreme Thermoschock- und Thermoermüdung auszeichnen. Diese Keramiken basieren bevorzugt auf oxidkeramischen Fasergeweben der Firmen 3M^{®} (Nextel^{®} 610 und Nextel^{®} 720), Nivity Company Ltd , Tokyo, Japan (R-960D) oder Rath.

Keramikblech ist eine Oxidfaser-verstärkte Oxidkeramik, entwickelt vom Unternehmen Walter E.C. Pritzkow Spezialkeramik, Stuttgart. Der Faser-Verbundwerkstoff besteht aus hochtemperaturbeständigen Endlosfasern und Matrizes basierend auf Al₂O₃ SiO₂ und Mullit. Der Werkstoff zählt zu der Klasse der Oxide Ceramics Matrix Composites, kurz OCMC. Die Herstellung der Bauteile erfolgt mit ähnlichen Laminiertechnologien, die bei der Herstellung von faserverstärkten Kunststoffen verwendet werden. Durch entsprechende Formen, Verfahren und Anlagen können Platten, Rohre und komplexe dünnwandige Leichtbaustrukturen hergestellt werden. Dieser oxidkeramischer Faser-Verbundwerkstoff, der in relativ kleinen Stückzahlen beispielsweise im Ofenbau, in der Brennertechnik, Energie- oder Gießereitechnik zum Einsatz kommt, kann entsprechend den Herstellerangaben langzeitig bei Temperaturen unterhalb von 1200°C und nur kurzzeitig bei Temperaturen bis zu 1700°C eingesetzt werden. Die Zug- und Biegefestigkeit liegen auf einem niedrigen Niveau.

COI Ceramics, Inc. (San Diego, California, USA; http://www.coiceramics.com) hat einen oxidkeramischen Werkstoffverburid vor allem für den Einsatz in kommerziellen Gasturbinen entwickelt. Die Herstellung der Bauteile erfolgt mit ähnlichen Laminiertechnologien, die bei der Herstellung von faserverstärkten Kunststoffen verwendet werden, wobei die finale Formgebung der Grünling durch eine Vakuumtechnik erfolgt. Ein Fasergewebe wird hierbei mit dem Schlicker infiltriert und anschließend über eine Form gelegt und in einem Vakuumschritt an dieser Form unter Bildung eines Grünlings getrocknet und anschließend bei etwa 1150 °C gesintert. Basierend auf Aluminiumsilikat erreicht dieser Werkstoff eine Zugfestigkeit bis etwa 365 MPa und eine interlaminare Scherfestigkeit von etwa 12 MPa bei Faservolumengehalten um 50 Vol.%. Hierbei werden Nextel^{®} 312, Nextel^{®} 550, Nextel^{®} 610 und Nextel^{®} 720-Fasern von 3M eingesetzt.

Das Material Zentrum Leoben präsentiert (R. Simon, P. Supancic, Proceedings of the 28th International Conference & Exposition on Advanced Ceramics & Composites, January 25-30, 2004, Cocoa Beach, Florida; Verbundwerkstoffe, Hrsg. H.-P. Dregischer, Wiley-VCH Verlag, Juli 2003, S. 298 bis 303) die Entwicklung und kolloidale , Herstellung eines neuen Oxid/Oxid-Verbundwerkstoffes. Die Laminatherstellung erfolgt durch Infiltration der Keramikgewebe mit der niedrigviskosen, kolloidalen Suspension mit niedrigem Feststoffgehalt in klassischem naß-in-naß Handlaminierverfahren. Das Laminat wird mittels Vakuumsacktechnik entgast und verdichtet. Die Verfestigung des Laminates bei Raumtemperatur dauert 24 bis 48 h. Mit einem Faservolumengehalt von 46 bis 48 % erreicht man eine Zugfestigkeit bis etwa 300 MPa und ILLS-Werte für die interlaminare Scherfestigkeit von etwa 14 MPa. Die interlaminare Scherfestigkeit kann nach DIN 65148 gemessen werden und gibt den Quotienten an aus der Kraft, die im Zugversuch zum Bruchversagen innerhalb der Scherfläche führt, und der Scherfläche.

Für die Herstellung von oxidischen CMCs entwickelt das Fraunhofer ISC (A. Rüdinger, W. Glaubitt, 15. Symposium Verbundwerkstoffe und Werkstoffverbunde, 6.-8. April 2005, Universität Kassel) Bindersysteme und Füllpulver auf der Basis einer supramolekularen organischen Vorstufe. Durch Tauchbeschichtung mit einem Beschichtungs-Sol und anschließender thermischer Aufarbeitung wird eine Zwischenschicht auf die Fasern aufgebracht. Das Erweichen der Bindersysteme bei Temperaturen von 100 bis 140 °C ermöglicht eine Nachverdichtung der CMC- Grünling, was zu erhöhten Fasergehalten der CMC's im Bereich von etwa 30 Vol.% führt. Die Zugfestigkeit dieser Keramikverbunde beträgt 152 MPa (0°/90°), die 3-Punkt-Biegefestigkeit um 250 MPa und die ILSS 4 MPa.

DE 198 26 792 A1 beschreibt ein thermisch hochbeständiges und oxidationsbeständiges Faserverbundmaterial aus oxidkeramischen Fasern sowie ein Verfahren zu dessen Herstellung.

EP 02 60 867 A1 beschreibt eine Ofenauskleidung aus faserhaltigem keramischem Material.

US 6,472,059 B2 beschreibt einen sandwichartigen Verbund von Langfaser-CMC (Ceramic Matrix Composit) und Kurzfaser-CMC. In dem beschriebenen Verfahren wird ein polymerabgeleiteter Grünling durch Pyrolyse keramisiert. Die Verbindung der Lang- und Kurzfaserkomponente erfolgt im Feuchtzustand.

US 5,198,282 A und US 5,376,598 A beschreiben einen keramischen Isolationsverbundwerkstoff. Hierbei weist die Langfaserkomponente eine hohe Dichte auf und kann sogar glasartig sein. Die Matrix enthält Whisker, die aus gesundheitlichen Gründen problematisch sind. Die Verbindung der Lang- und Kurzfaserkomponenten erfolgt im Feuchtzustand.

US 6,733,907 D2 beschreibt einen Verbund aus keramischer Trägerstruktur und keramischer Wärmedämmschicht. Die Wärmedämmschicht weist dabei eine höhere Temperaturbeständigkeit als die langfaserverstärkte Trägerstruktur auf und schützt diese gegen zu hohe thermische Belastungen. Voraussetzung für dieses Konzept ist eine rückseitige Kühlung und ein hinreichender Wärmetransport durch die Trägerstruktur.

DE 10 2004 049 406 A2 beschreibt ein mehrschichtiges Formteil aus hochtemperaturbeständigen, chemisch resistenten und mechanisch schadenstoleranten Keramikwerkstoffen sowie ein Verfahren zur Herstellung des Formteils.

Nachteil des Standes der Technik ist der aus der üblichen Herstellungstechnik resultierende hohe Fasergehalt der keramischen Faser-Verbundwerkstoffe von typischerweise mehr als 30 Vol.%, der sich zum einen durch die Partikelgrößenverteilung der verwendeten oxidkeramischen Pulver ergibt (beispielsweise Aluminiumsilikat beziehungsweise Aluminiumoxidpulver), das in Form einer Suspension in die Fasergewebe beziehungsweise einzelne, kontinuierliche Rovings (Bündel von Einzelfilamenten) infiltriert wird. Zum anderen wird der Fasergehalt aber auch stark von der dynamischen Viskosität der Suspension beeinflusst. Ausreichende Mengen an kleinen Partikeln sind jedoch notwendig für eine ausreichende Sinteraktivität in einem Temperaturbereich, der nicht zur Schädigung (Kristallisation) der Fasern führt. Typischerweise führt jedoch eine hohe Menge an kleinen Partikeln zu einer erhöhten Viskosität. Niedrige dynamische Viskosität der Suspension ist jedoch Grundvoraussetzung für eine vollständige Infiltration der Faserbündel beziehungsweise Fasergewebe. Durch den hohen Fasergehalt kann es zu Kontakt unter den Fasern kommen, was zu einer Verschlechterung der mechanischen Eigenschaften führt.

Die Herstellung bisher bekannter oxidkeramischer Komposits erfolgt durch Infiltration von Fasergeweben mit einem in der Regel komplexen Schlicker, der meistens Bindemittel in größerer Menge enthält, die zunächst ausgebrannt werden müssen. Zudem wird eine aufwändige und zeitintensive Vakuum- und Trocknungstechnik eingesetzt. Die resultierenden Werkstoffe sind daher sehr teuer, da die Fertigung oft einige Tage in Anspruch nimmt (beispielsweise COI Ceramics,Inc.) oder da die verwendeten Ausgangsmaterialien bereits extrem kostspielig sind (Material Zentrum Leoben, Österreich).

Bei relativ einfacher Fertigung der keramischen Verbunde, wie beispielsweise Keramikblech (Walter E.C. Pritzkow Spezialkeramik, Stuttgart) liegen die Materialkennwerte wie E-Modul, Zugfestigkeit oder Biegefestigkeit jedoch in einem Bereich, der viele Einsatzgebiete ausschließt.

Aufgabe der vorliegenden Erfindung ist es also, den Fasergehalt durch bestimmte Herstellungsparameter gezielt einzustellen, um so den unterschiedlichen Ansprüchen bezüglich Materialkosten und Eigenschaften gerecht zu werden. Eine weitere Aufgabe der vorliegenden Erfindung ist es, eine oxidkeramische Matrix bereitzustellen, die bei der Trocknung und bei der Sinterung nur minimal schrumpft und im Verbund mit oxidkeramischen Fasern zu einem Material mit hervorragenden mechanischen Eigenschaften führt, gleichzeitig aber auch einfach und preiswert herzustellen ist.

In einer ersten Ausführungsform wird die der Erfindung zu Grunde liegende Aufgabe gelöst durch ein Verfahren zur Herstellung eines oxidkeramischen Faser-Verbundwerkstoffes **mit den Merkmalen des Anspruchs 1. Weitere Ausführungsformen sind den davon abhängigen Unteransprüchen sowie den Ansprüche 8 und 9 zu entnehmen.**

Endlosfasern im Sinne der Erfindung sind Fasern, gesponnene Fäden, Rovings, Stränge, Schnüre, Vliese oder Gewebe, deren Länge im wesentlichen durch die Dimensionen des aus dem erfindungsgemäßen Faser-Verbundwerkstoffes hergestellten Formkörpers beschränkt wird.

Sintern (auch Sinterung) im Sinne der Erfindung ist ein urformendes Fertigungsverfahren für Formteile. Es gestattet die Herstellung von Fertigteilen und Halbzeugen unter Umgebung der flüssigen Phase. Dabei werden.. Pulvermassen unter Kompaktierung zunächst so geformt, dass wenigstens ein minimaler Zusammenhalt der Pulverpartikel gegeben ist. Dieser sogenannte Grünling wird im Anschluss durch Wärmebehandlung unterhalb der Schmelztemperatur verdichtet. Die Herstellung des Grünlings erfolgt dabei beispielsweise entweder durch Verpressen von Pulvermassen, Schlickerguss oder durch einen Wickelprozess. Unter Sintertemperatur im Sinne der Erfindung wird diejenige Temperatur verstanden, bei der der getrocknete Grünkörper in den Faser-Verbundwerkstoff als Endprodukt überführt wird.

Der Sintervorgang läuft in 3 Stadien ab, während derer sich die Porosität und das Volumen des Grünlings deutlich verringert. Im ersten Stadium erfolgt lediglich eine Verdichtung des Grünlings, wohingegen sich im zweiten Stadium die offene Porosität deutlich verringert. Die Festigkeit der Sinterkörper beruht auf den im dritten Stadium gebildeten Sinterhälsen, die durch Oberflächendiffusion zwischen den Pulverpartikeln entstehen.

Im Unterschied zum Sintern muss die Kalzinierung gesehen werden. Bei der Kalzinierung werden keramische Pulver ohne zu schmelzen oder sich zu verbinden zu einer so hohen Temperatur erhitzt, dass flüchtige Stoffe entfernt oder chemische Veränderungen bewirkt werden können. Hierbei wird das Pulver nicht kompaktiert. Üblicherweise würde der Fachmann dabei die Kalzinierungstemperatur so niedrig einstellen, dass die Sinteraktivität der keramischen Pulver hinreichend hoch bleibt. Kalzinierung im Sinne der Erfindung unterscheidet sich von der üblichen Definition dadurch, dass eine Kalzinierungstemperatur gewählt wird, die mindestens bei derjenigen Temperatur liegt, bei der sich Sinterhälse bilden können und höchstens unterhalb der Schmelztemperatur liegt, wobei jedoch die Rieselfähigkeit beim Kalzinieren erhalten bleibt. Es kann also bei der Kalzinierung im Sinne der Erfindung zur Bildung von Sinterhälsen kommen, die bei der anschließenden Vermahlung zerstört werden. Daher kann auch die Zeitdauer der Kalzinierung so gewählt werden, das - eine weitreichende Bildung von Sinterhälse vermieden wird. Durch das anschließende Aufmahlen in Schritt b) werden die Sinterhälse zumindest teilweise zerstört. Hierdurch entstehen an den Bruchstellen aktive Punkte des oxidkeramischen Pulvers. Der Zeitraum der Kalzinierung wird deshalb vorzugsweise in einem Bereich von 1 bis 5 h ausgewählt.

Es wurde überraschend gefunden, dass eine Kalzinierung des oxidkeramischen Pulvers bei ungewöhnlich hohen Temperaturen oberhalb der Sintertemperatur und vorzugsweise unterhalb der Schmelztemperatur ein oxidkeramisches Pulver erzeugt, welches zu einem Schlicker führen kann, der erstaunlich niedrige dynamische Viskosität bei bemerkenswert hohem Feststoffanteil aufweist. Daher liegt die Kalzinierungstemperatur beim erfindungsgemäßen Verfahren vorteilhafterweise zwischen der Sintertemperatur und der Schmelztemperatur des oxidkeramischen Pulvers. Gewöhnlich findet eine Kalzinierung bei Temperaturen von einigen hundert Grad unterhalb der Sintertemperatur statt, damit eine Verbindung der Partkiel durch- Sinterhälse vermieden wird. So werden oxidkeramische Materialien wie Aluminiumoxide und -hydroxide üblicherweise bei Temperaturen bis zu 950 °C kalziniert.

Werden dieselben Aluminium-basierten oxidkeramischen Pulver bei Temperaturen von vorzugsweise in einem Bereich von 1200 °C bis 1300 °C kalziniert, so können Schlicker erhalten werden, die eine wesentlich niedrigere dynamische Viskosität bei einem hohen Feststoffgehalt aufweisen.

Trocknen im Sinne der Erfindung bezeichnet die Entfernung von Wasser durch Temperatureinwirkung vorzugsweise in einem Bereich von 40 bis 100 °C vorteilhafterweise über einen Zeitraum in einem Bereich von 0,5 bis 8 Stunden. --, -'-'

Ein wesentlicher Vorteil des erfindungsgemäßen Verfahrens gegenüber Verfahren des Standes der Technik ist, dass neben einer hohen Festigkeit, bei eindimensionaler Faserausrichtung vorzugsweise mehr als 500 MPa (bei einem Fasergehalt von mindestens 40 Vol.%) und bei zweidimensionaler Faserausrichtung (beispielsweise Fasern um 90° gegeneinander versetzt, wobei jede Faser im Winkel von 45° zur Belastungsrichtung im Biegebeziehungsweise im Zugversuch gemessen wird) vorzugsweise mindestens 200 und besonders bevorzugt in einem Bereich von 250 bis 350 MPa (bei einem Fasergehalt von mindestens 30 Vol.%) im 3-Punkt-Biegeversuch, die extrem hohe Schadenstoleranz (nicht sprödes Bruchverhalten) des neuen Faserverbundmaterials ohne Beschichtung der Fasern realisiert wird. Diese Festigkeiten im 3-Punkt-Biegeversuch beziehen sich vor allem auf Faser-Verbundwerkstoffe, die die Faser Nextel^{®} 610 von 3M enthalten. Biegeproben mit einer Höhe von 3,6 mm, einer Breite von etwa 10 mm und einer Prüflänge von 60 mm halten nach einer Durchbiegung von etwa 0,1 bis 0,2 mm noch eine Biegespannung von etwa 60% der maximalen Biegespannung. Bei weiterer Durchbiegung fällt die Biegespannung nur auf 25 bis 30% der maximalen Biegespannung. Besonders bemerkenswert in diesem Zusammenhang ist, dass bei Durchführung des erfindungsgemäßen Verfahrens keine visuell sichtbaren makroskopischen Schrumpfrisse auftraten.

Durch gezielte Einstellung der dynamischen Viskosität der Schlicker (keramische Suspensionen) kann der Fasergehalt der Keramikverbunde in einem weiten Bereich eingestellt werden. Die dynamische Viskosität kann durch Variation des Feststoffgehaltes, der Kalzinierungstemperatur, Art und Menge an Verflüssiger, Mahldauer oder durch die Zugabe von Füllstoffen verändert werden.

Die dynamische Viskosität wurde mittels eines Physica Rotationsviskosimeters Rheolab MC10^{®} bei einer Temperatur von 21 °C in 3 min unter Verwendung des Einsatzes Z1 (DIN Doublegap) mit einer Probenmenge von 53 g Schlicker bei einer Drehzahl von 0,49 s⁻¹ und einer Scherrate von 146,8 s⁻¹ gemessen.

Vorteilhafterweise werden die infiltrierten Fasern noch vor der Verdichtung zum Grünling angetrocknet, wodurch unmittelbar Einfluss auf die dynamische Viskosität der Suspensionen genommen werden kann. Im Stand der Technik kann die dynamische Viskosität nach der Infiltration der kontinuierlichen Fasern oder Fasergewebe nicht mehr verändert werden.

Weiterhin kann die dynamische Viskosität über den Feststoffgehalt (50 bis 80 Gew.%) der Suspension durch Kalzinierung der keramischen Pulver vorzugsweise in einem Temperaturbereich oberhalb von 1150 °C, insbesondere bis zu 1400 °C und Zugabe unterschiedlicher Mengen an Verflüssiger variiert werden. Die Temperatur wird in jedem Fall unterhalb des Schmelzpunktes ausgewählt.

Durch die Herstellung einer wässrigen Suspension, des Schlickers, mit einem Feststoffgehalt von vorzugsweise mehr als 65 Gew.% kann die Schrumpfung der oxidkeramischen Matrix minimiert werden. Grundvoraussetzung ist die Kalzinierung (thermische Vorbehandlung) bei Temperaturen vorzugsweise in einem Bereich von 1150 °C bis 1300 °C der oxidkeramischen Pulver, insbesondere Aluminium-, Aluminiumoxid-, Aluminiumhydroxyd- oder Aluminiumsilikatpulver, die anschließend unter Zugabe eines Verflüssigers so aufgemahlen werden, dass ein hoher Anteil an sehr feinen Partikeln (mittlerer Teilchendurchmesser höchstens 0,5 µm) vorliegt. Nach der Infiltration von kontinuierlichen, oxidkeramischen Faserbündeln (Rovings) [beispielsweise 3M (Nextel^{®} 610 und/oder Nextel^{®} 720)], die vorteilhafterweise über einen Wickelprozess zu einem Grünling weiterverarbeitet werden können beziehungsweise durch die Infiltration von Fasergeweben, und/oder die laminiert werden, erfolgt die Trocknung des Grünlings vorzugsweise auf einer Gipsplatte im Trockenschrank bei einer Temperatur von wenigstens 50 °C und abschließendem Sintern vorzugsweise an Luft bei einer Temperatur von wenigstens 1100 °C. Vorteil gegenüber dem Stand der Technik ist, dass auf diese Weise, also trotz geringem Herstellungsaufwand, innerhalb von nur wenigen Stunden ohne Nachverdichtung oder längerer Standzeit ein Material produziert werden kann, das ausgezeichnete mechanische Eigenschaften aufweist. Erwähnenswert ist, dass diese Herstellungsroute die Verwendung preiswerter Keramikpulver ermöglicht.

Wichtig bei der vorliegenden Erfindung ist also ein hoher Feststoffanteil des Schlickers (50 bis 80 Gew.%) bei gleichzeitig niedriger dynamischer Viskosität (weniger als 150 mPa·s). Bisher wird im Stand der Technik bezüglich der Herstellung von keramischen Faserverbundwerkstoffen ein Feststoffgehalt des Schlickers von weniger als 50 Gew.% eingesetzt.

Das keramische Material der Endlosfasern und/oder des oxidkeramischen Pulvers enthält überwiegend x₁ Al₂O₃ • y₁ SiO₂, insbesondere besteht es daraus, wobei x₁ eine Zahl im Bereich von 1 bis 5 und y₁ eine Zahl im Bereich von 0 bis 4 ist. Das jeweilige keramische Material kann alternativ vorzugsweise auch SiO₂, MgO, AIO(OH), Al₂O₃, ZrO₂ sein und/oder als Füllstoff und/oder Dotierung enthalten. Besteht das oxidkeramische Pulver aus AlO(OH), Al₂O₃ oder Mischphasen oder Mischungen derselben, so wird es vorzugsweise bei einer Temperatur in einem Bereich von 950 bis 1350 °C, insbesondere in einem Bereich von mehr als 1150 bis 1350 °C kalziniert.

Der Fasergehalt kann im erfindungsgemäßen Verfahren konkret auf bestimmte Werte eingestellt werden. Im erfindungsgemäßen Verfahren werden in Bezug auf den fertigen Faser-Verbundwerkstoff vorteilhafterweise Fasern in einer Menge von wenigstens 25 und bis zu 50 Vol.%, vorzugsweise 30 bis 45 Vol.%, und besonders bevorzugt höchstens 40 Vol.% eingesetzt. Bisher war eine genaue Einstellung des Fasergehaltes unmöglich und der Fasergehalt bei bereits bekannten Faser-Verbundwerkstoffen schwankt zwischen mehr als 40 bis 50 Vol.%.

Endlosfasern im Sinne der Erfindung können Einzelfilamentfasern oder auch Rovings (Faserbündel) sein. Die Endlosfasern bestehen vorzugsweise aus Silikaten, Aluminiumoxiden, Aluminiumhydroxiden, Mischphasen dieser Stoffe oder Mischungen dieser Stoffe. Als oxidationsbeständige, aluminiumoxidreiche Mullitfasern im Sinne der vorliegenden Erfindung werden besonders bevorzugt Fasern des Typs Nextel^{®} 610 3000 Denier oder Nextel^{®} 720 3000 Denier der Firma 3M (USA) eingesetzt. Erfindungsgemäß können beispielsweise auch Fasern mit einem Fasergewicht in einem Bereich von 1500 bis 10000 Denier zum Einsatz kommen. Diese Aluminiumsilikatfaser hat im Vergleich zu anderen Faserqualitäten die zurzeit besten mechanischen Eigenschaften im Hochtemperaturbereich in oxidierender Atmosphäre. Die Zugfestigkeit der Nextel^{®} 610 3000 Denier Faser liegt bei einer Prüflänge von 25 mm, etwa bei 3300 MPa. Der E-Modul beträgt etwa 260 GPa. Die Endlosfasern werden, wie vom Hersteller geliefert, vorteilhafterweise zunächst durch einen Rohrofen mit einer Temperatur im Bereich von 900 bis 1100 °C mit einer Geschwindigkeit in einem Bereich von vorzugsweise 3 bis 50 m/min gezogen, um das Sizing (epoxidartige Verklebung des Rovings, um eine schadlose Bearbeitung der Fasern zu gewährleisten) auszubrennen.

Anschließend erfolgt vorteilhafterweise die Tränkung der kontinuierlichen Fasern mit dem oben beschriebenen Schlicker, vorzugsweise auf Basis des oxidkeramischen Pulvers mit einer Oberfläche nach B.E.T. von bis zu 150 m²/g, über ein Rollensystem.

Die danach vorzugsweise angetrockneten Fasern werden vorteilhafterweise auf eine in einer klimatisierten Kammer befindlichen und mit einer Trennfolie belegen Trommel aufgewickelt. Zur Herstellung von Rohren erfolgt die Trocknung direkt auf der Trommel. Zur Fertigung anderer geometrischer Formen werden vorteilhafterweise die noch feuchten Fasergelege nach Einschneiden mit einem Skalpell von der Trommel entfernt und durch Unterlegen entsprechender Formen die gewünschte Geometrie nach vollständiger Trocknung realisiert. Dabei können auch mehrere dünne Lagen im noch feuchten Zustand gestapelt und durch Pressen zusammengefügt werden. Anschließend wird der so hergestellte Grünling vorteilhafterweise in einem Luftofen oder Kammerofen freistehend bei einer Temperatur von wenigstens 1100 °C gesintert. Somit können beispielsweise auch keramische Federn hergestellt werden. Die Grünling lassen sich nach der vollständigen Trocknung leicht mechanisch bearbeiten - beispielsweise durch Bohren, Schleifen, Fräsen oder Sägen mit herkömmlichem Werkzeug.

Der im erfindungsgemäßen Verfahren eingesetzte Schlicker ist vorzugsweise frei von Kurzfasern mit einer Länge von weniger als 2 cm. Diese auch als Whisker bezeichneten Kurzfasern sind gesundheitsschädlich und limitieren damit das erfindungsgemäße Faser-Verbundmaterial in seiner Anwendung.

Vorteilhafterweise kalziniert man das oxidkeramische Pulver bei einer Temperatur von mindestens 1250 °C, insbesondere mindestens 1300 °C. Durch diese Temperaturbehandlung wird ein oxidkeramisches Pulver erhalten, mit welchem ein Schlicker erstellt werden kann, der trotz hohem Gehalt an diesem oxidkeramischen Pulver (Feststoffgehalt) eine niedrige dynamische Viskosität aufweist.

Vorteilhafterweise setzt man einen Schlicker mit einer dynamischen Viskosität in einem Bereich von 20 bis 100 mPas·s, insbesondere 20 bis 50 mPas·s ein. Durch die niedrige dynamische Viskosität wird sichergestellt, dass die Endlosfasern vollständig und gleichmäßig infiltriert werden. Wird als Endlosfaser ein Roving eingesetzt, so kann durch diese niedrigen Viskositäten der Schlicker zwischen den einzelnen Filamenten eindringen, die Einzelfilamente belegen und so zumindest teilweise voneinander beabstanden. Dies kann man auch visuell durch Aufquellen des Rovings beobachten.

**Erfindungsgemäß** setzt **man** einen Schlicker mit einem Feststoffanteil von mindestens 65 Gew.%, insbesondere mindestens 75 Gew.% ein. Dadurch werden bei der Vortrocknung, Trocknung und/oder beim Sintern weniger flüchtige Stoffe entfernt und es kommt im Vergleich zum Stand der Technik nur noch zu einer minimalen Schrumpfung des Grünlings relativ zum fertigen Faser-Verbundwerkstoff. Diese Schrumpfung beträgt vorteilhafterweise weniger als 2 % in jeder Längenausdehnung des Grünlings. Der maximal erreichbare Feststoffanteil ist durch die Partikelgröße der Teilchen und die dichtestmögliche Packung dieser Teilchen festgelegt.

Vorzugsweise setzt man einen Schlicker enthaltend Verflüssiger in einer Menge von 0,2 bis 2 Gew.%, besonders bevorzugt 0,2 bis 0,7 Gew.% ein. Durch die Menge des Verflüssigers kann die dynamische Viskosität und damit, bedingt durch das erfindungsgemäße Herstellungsverfahren, der Fasergehalt des Faser-Verbundwerkstoffes gezielt eingestellt werden. Ist die Menge an Verflüssiger zu hoch, so wird im Extremfall eine nachteilige Schrumpfung des Faser-Verbundwerkstoffes bei der Trocknung und/oder bei der Sinterung beobachtet. Allgemein kommt es bei zu hohem Gehalt an Verflüssiger zu einem schlechten Zusammenhalt der entstehenden Grünlinge und zu einer schlechten Stabilität des Schlickers. Ist der Gehalt an Verflüssiger jedoch zu niedrig, so ist die dynamische Viskosität zu hoch und man kann mit dem Schlicker nicht mehr die Filamente und/oder Fasern und/oder Rovings hinreichend einheitlich benetzen und so den Gehalt der Fasern gezielt einstellen. Der Verflüssiger basiert vorteilhafterweise auf Carbonsäuren, insbesondere ausgewählt aus der Gruppe Dolaflux^{®} (Zschimmer & Schwarz GmbH & Co.), Dolapix^{®} (Zschimmer & Schwarz GmbH & Co.), Tiron^{®}, Peptapon^{®}, Optapix^{®} und Giessfix^{®}.

Bevorzugt wird nach dem Vermischen der Inhaltsstoffe des Schlickers dieser über einen Zeitraum in einem Bereich von 5 bis 60 Minuten gemahlen, insbesondere unter Verwendung einer Planetenkugelmühle mit ZrO₂ Kugeln als Mahlmedium. Dabei werden die Pulver nach dem Kalzinieren intensiv aufgemahlen. Das Mahlen mit hohem Anteil, vorzugsweise mit einer 2 bis 5 fachen Menge relativ zum übrigen Feststoffgehalt, an ZrO₂ - Kugeln (0,5 bis 5 mm Durchmesser) eines kalzinierten, oxidkeramischen Pulvers in der Art, dass die mittlere Korngröße gewichtet nach Volumenanteilen (d₅₀) vorteilhafterweise im Bereich von 0,1 bis 20 µm, insbesondere in einem Bereich von 0,2 bis 0,5 µm, vorliegt, ist bezüglich der Herstellung von keramischen Faserverbundwerkstoffen bislang unbekannt. Dadurch werden die Agglomerate des oxidkeramischen Pulvers aufgebrochen, um anschließend unmittelbar von Verflüssiger umhüllt zu werden. Dies hat Einfluss auf das zeta-Potential und somit die Stabilität der Partikel des oxidkeramischen Pulvers.

Man setzt vorzugsweise einen bindemittelfreien Schlicker ein. Bindemittel im Sinne der Erfindung ist eine organische Substanz, die die Teilchen des Schlickers zusammenhalten kann. Insbesondere werden als Bindemittel solche auf Basis von Wachs, Polymeren und insbesondere Harzen verstanden. Für das erfindungsgemäße Verfahren wurde überraschend und entgegen der üblichen Meinung festgestellt, dass der Schlicker auch ohne Bindemittel einen mechanisch stabilen Grünling bilden kann. Dies hat den entscheidenden Vorteil, dass der Feststoffanteil an oxidkeramischem Pulver im Schlicker wesentlich höher liegen kann und so eine Schrumpfung beim Trocknen und Sintern weitgehend vermieden werden kann.

Es hat sich als besonders vorteilhaft herausgestellt, wenn die infiltrierten Endlosfasern kontinuierlich aufgewickelt werden. Dabei werden die Endlosfasern nach dem Infiltrieren mit dem Schlicker und gegebenenfalls dem Vortrocknen unter Bildung des Grünlings aufgewickelt und daraufhin der Wickelkörper getrocknet. Der Grünling kann anschließend beispielsweise mit einem Skalpell vom Wickelkörper getrennt werden. Hierdurch wird ein besonders gleichmäßiges Bilden des Grünlings realisiert, die zusätzlich eine gezielte Vortrocknung erlaubt und so eine Möglichkeit gibt, den Feststoffgehalt des Schlickers nach der Infiltration, aber vor dem Aufwickeln, zu erhöhen und somit im Endeffekt den Fasergehalt des entstehenden Grünlings gezielt zu beeinflussen.

Vorzugsweise trocknet man die infiltrierten Endlosfasern vor der Bildung des Grünlings kontinuierlich in einer Mikrowelle vor. Durch diese kontinuierliche Vortrocknung in einer Mikrowelle kommt es zu einer sehr schnellen Verdampfung der Lösungsmittel, und insbesondere Wasser, da Mikrowellen selektiv Wassermoleküle anregen. Der Herstellungsprozess wird damit im Unterschied zum Stand der Technik wesentlich beschleunigt. Üblicherweise mussten die gebildeten Grünlinge nämlich einige Stunden an der Luft trocknen. Durch eine nachgeschaltete Antrocknung in einem kontinuierlich arbeitendem Mikrowellenofen wird durch Wasserverdampfung der Feststoffanteil des vom Roving aufgenommenen Schlickers also unmittelbar erhöht. Aufgrund der nun höheren dynamischen Viskosität wird beim abschließenden Aufwickeln ein Material mit geringerem Faservolumengehalt aufgebaut. Bei den bisher bekannten Verfahren konnte nach der Infiltrierung der Fasern mit dem Schlicker kein Einfluss auf die dynamische Viskosität beziehungsweise den Feststoffgehalt des Schlickers auf der Faser genommen werden.

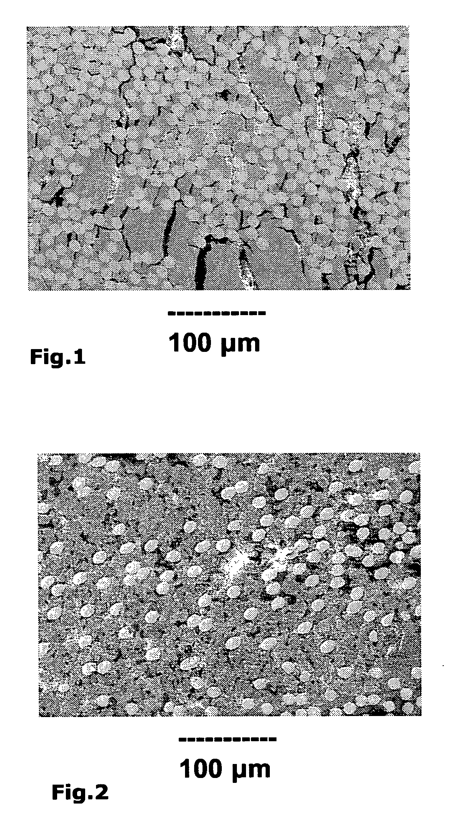

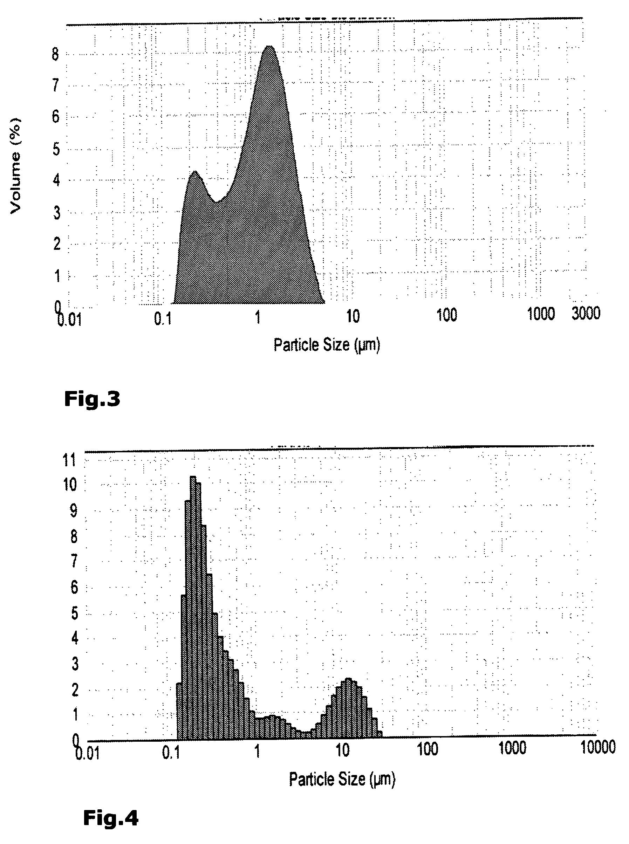

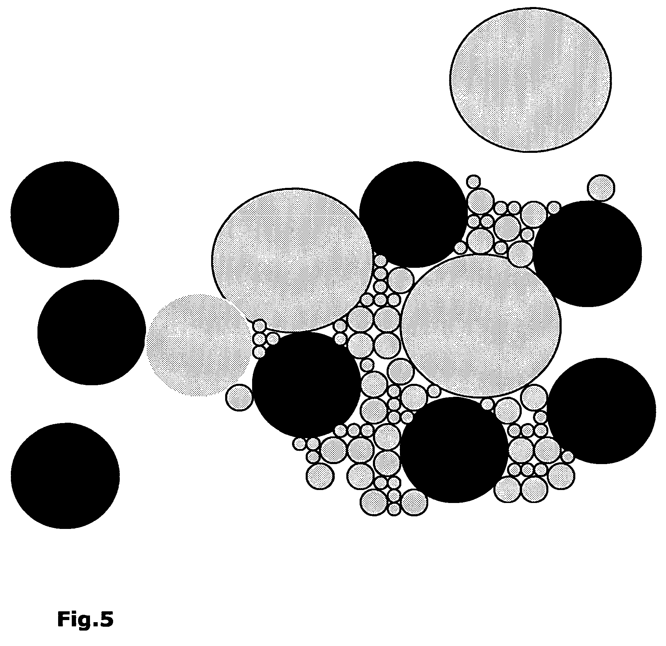

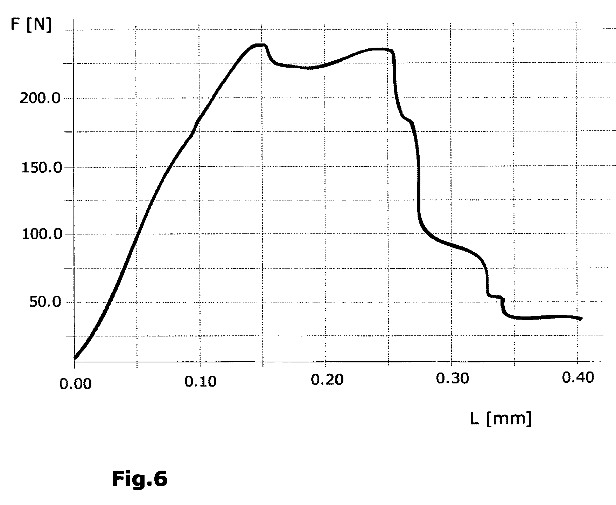

Vorteilhafterweise wird ein oxidkeramisches Pulver eingesetzt, welches im fertigen oxidkeramischen Faser-Verbundwerkstoff verschiedene Korngrößenfraktionen aufweist, wobei mindestens eine der Korngrößenfraktionen eine mittlere Korngröße gewichtet nach Volumenanteilen von bis zu 0,5 µm aufweist und mindestens eine weitere Korngrößenfraktion eine mittlere Korngröße gewichtet nach Volumenanteilen von mindestens 5 µm aufweist. Durch die größeren Kornfraktionen werden die Fasern im Verbundwerkstoff beabstandet und so der Fasergehalt zusätzlich kontrolliert. Die kleineren Korngrößenfraktionen sind für eine vollständige und gleichmäßige Sinterung unerlässlich. In Fig. 1 bis Fig. 5 ist der Einfluss der Partikelverteilung auf den Faservolumengehalt deutlich erkennbar. Fig. 1 zeigt die Partikelverteilung mit zwei Maxima bei etwa 0,2 µm und etwa 1,5 µm was zu einem Faservolumengehalt von 35 % führt (siehe rasterelektronenmikroskopische Aufnahme Fig. 2). In Fig. 3 ist eine Partikelverteilung mit drei Maxima bei etwa 0,2 µm, etwa 2 µm und etwa 12 µm erkennbar, was zu einem Faservolumengehalt von 11% führt (siehe rasterelektronenmikroskopische Aufnahme Fig. 4). Fig. 5 veranschaulicht schematisch verschiedene Korngrößenfraktionen, wie sie im Rahmen der Erfindung eingesetzt werden können. Fig. 6 zeigt ein erfindungstypisches schadenstolerantes und nicht sprödes Bruchverhalten in einem Spannungs-Dehnungs-Diagramm.

In einer weiteren Ausführungsform wird die der Erfindung zu Grunde liegende Aufgabe gelöst durch einen oxidkeramischen Faser-Verbundwerkstoff erhältlich nach dem erfindungsgemäßen Verfahren. Gegenüber dem Stand der Technik hat das Formteil neben der ausreichenden mechanischen Stabilität und der einfachen, preiswerten Herstellbarkeit komplexer Bauteile den Vorteil, dass es eine geringe Wärmekapazität, Wärmeleitfähigkeit und Dichte aufweist, schadenstolerant ist, einfach bearbeitet werden kann und eine hohe Langzeitstabilität in oxidierender Atmosphäre aufweist.

**Erfindungsgemäß** liegt der Volumenfasergehalt des erfindungsgemäßen Faser-Verbundwerkstoffs in einem Bereich von 25 bis 50 Vol.%, insbesondere in einem Bereich von 30 bis 45 Vol.%, besonders bevorzugt bis zu 40 Vol.%. Dadurch und wegen des hohen Preises der Endlosfasern ist der erfindungsgemäße Faser-Verbundwerkstoff erheblich günstiger als die bekannten Verbundwerkstoffe. Die bislang bekannten Verbundwerkstoffe weisen üblicherweise einen Volumenfasergehalt von mehr als 30 bis 50 Vol.% auf.

Vorteilhafterweise liegt die interlaminare Scherfestigkeit in einem Bereich von 9 bis 17 MPa und/oder das E-Modul in einem Bereich von 70 bis 200 GPa.

Gemäß der vorliegenden Erfindung kann vorteilhafterweise ein Faser-Verbundwerkstoff erhalten werden, der zum einen einen besonders niedrigen Volumenfasergehalt wie bereits erwähnt aufweist und gleichzeitig obenstehende hervorragende mechanische Eigenschaften besitzt.

Die Matrixporosität des erfindungsgemäßen Faser-Verbundwerkstoffs liegt vorteilhafterweise in einem Bereich von 35 bis 65 Vol.%. Dadurch besitzt der erfindungsgemäße Faser-Verbundwerkstoff trotz guter mechanischer Eigenschaften eine sehr gute Wärmedämmwirkung. Die Porosität wurde durch Vergleich des gewogenen Formkörpers und dem durch die theoretischen Dichte der verwendeten Stoffe gegebenen Gewicht bezogen auf das gleiche Volumen ermittelt.

Die erfindungsgemäßen Faser-Verbundwerkstoffe können beispielsweise eingesetzt werden in Brenngestellen (Sinterhilfsmittel), Auskleidungen von Hochtemperaturöfen, thermischen Nachverbrennungsanlagen und Wärmeisolierungen.

### Ausführungsbeispiel:

Zur Herstellung des Schlickers wurde zunächst das oxidkeramische Böhmitpulver PURAL SB (Hersteller: Sasol, Hamburg; spezifische Oberfläche: 256 m²/g; Al₂O₃-Gehalt: etwa 75 Gew.%) bei 1300°C 5 h kalziniert. Anschließend wurden zu 75 g dieses kalzinierten Schlickers 0,5 g Verflüssiger Dolapix^{®} CE64 (Hersteller: Zschimmer & Schwarz, Lahnstein; Polycarbonsäurebasis) und ZrO₂-Kugeln mit 24,5 g Wasser auf einer Planetenkugelmühle (PM4000 der Firma Retsch) etwa 30 min mischgemahlen.

Die oxidkeramische Faser (vorliegend als Roving, also einem Bündel von Einzelfilamenten) Nextel^{®} 610 3000 Denier wurde wie vom Hersteller geliefert zunächst durch einen Rohrofen mit einer Temperatur von 1100°C gezogen, um das Sizing (epoxidartige Verklebung der Rovings) auszubrennen. Anschließend erfolgte die Infiltration der kontinuierlichen Fasern in dem oben beschriebenen Schlicker, indem die Faser durch einen Kanal enthaltend den Schlicker gezogen wurde.

Die Rovings wurden mit einem Wickelwinkel von 45° auf einen zylindrischen Kern gewickelt, wobei er eine kontinuierlich laufende Mikrowelle zur Vortrocknung durchlief. Die Wickelgeschwindigkeit betrug 16 m/min. Der noch etwas feuchte Grünling wurde nach Einschneiden mit einem Skalpell vom Kern entnommen, auf eine Gipsplatte gelegt und im Trockenschrank bei etwa 60°C 4h getrocknet. Die abschließende Sinterung erfolgte in einem Kammerofen bei 1250 °C 60 min an Luft.

Faservolumengehalt von 34 % und eine Matrixporosität von 50 %.
Die interlaminare Scherfestigkeit betrug 13 +/- 4 MPa, die 3-Punkt-Biegefestigkeit beträgt 310 +/- 20 MPa und das E-Modul beträgt 87 +/- 8 GPa.

## Patentansprüche

1. Verfahren zur Herstellung eines oxidkeramischen Faser-Verbundwerkstoffes umfassend die folgenden Schritte:
a) Kalzinieren eines oxidkeramischen Pulvers, enthaltend überwiegend x₁ Al₂O₃ • y₁ SiO₂, wobei x₁ eine Zahl im Bereich von 1 bis 5 und y₁ eine Zahl im Bereich von 0 bis 4 ist, bei einer Kalzinierungstemperatur, welche unterhalb der Schmelztemperatur des Pulvers liegt und mindestens 1250°C beträgt unter Beibehaltung von Rieselfähigkeit,
b) Herstellen eines Schlickers mit einer dynamischen Viskosität in einem Bereich von 10 bis 150 mPas·s, enthaltend 65 bis 80 Gew.% des oxidkeramischen Pulvers bezogen auf die Gesamtmenge des Schlickers, 0,1 bis 3 Gew.% eines Verflüssigers bezogen auf die Gesamtmenge des Schlickers und im übrigen Wasser unter Mischmahlen,
c) Infiltrieren von oxidkeramischen Endlosfasern mit dem Schlicker,
d) Bilden eines Grünlings als Formkörper,
e) Trocknen des Grünlings, und
f) Sintern des Grünlings unter Bildung des oxidkeramischen Faser-Verbundwerkstoffes.

2. Verfahren gemäß Anspruch 1, **dadurch gekennzeichnet, dass** man das oxidkeramische Pulver bei einer Temperatur von mindestens 1300 °C kalziniert.

3. Verfahren gemäß einem der vorhergehenden Ansprüche, **dadurch gekennzeichnet, dass** man einen Schlicker mit einer dynamischen Viskosität in einem Bereich von 20 bis 100 mPas.s, insbesondere 20 bis 50 mPas.s einsetzt.

4. Verfahren gemäß einem der vorhergehenden Ansprüche, **dadurch gekennzeichnet, dass** man einen Schlicker mit einem Feststoffanteil von mindestens 75 Gew.% einsetzt.

5. Verfahren gemäß einem der vorhergehenden Ansprüche, **dadurch gekennzeichnet, dass** man einen Schlicker enthaltend Verflüssiger in einer Menge von 0,2 bis 2 Gew.%, insbesondere 0,2 bis 0,7 Gew.% einsetzt.

6. Verfahren gemäß einem der vorhergehenden Ansprüche, **dadurch gekennzeichnet, dass** man einen bindemittelfreien Schlicker einsetzt.

7. Verfahren gemäß einem der vorhergehenden Ansprüche, **dadurch gekennzeichnet, dass** man die infiltrierten Endtosfasern vor der Bildung des Grünlings kontinuierlich in einer Mikrowelle vortrocknet.

8. Oxidkeramischer Faser-Verbundwerkstoff aus Silikaten, Aluminiumoxiden, Mischphasen dieser Stoffe oder Mischungen dieser Stoffe mit einer zweidimensionalen Faserausrichtung mit einem Volumenfasergehalt in einem Bereich von 25 bis 50 Vol.%, erhalten nach einem Verfahren gemäß einem der vorhergehenden Ansprüche und mit einer Biegefestigkeit von mindestens 200 MPa im 3-Punkt-Biegeversuch.

9. Oxidkeramischer Faser-Verbundwerkstoff **aus Silikaten, Aluminiumoxiden, Mischphasen dieser Stoffe oder Mischungen dieser Stoffe** mit eindimensionaler Faserausrichtung, mit einem Fasergehalt von mindestens 40 Vol.-%, erhalten nach einem Verfahren gemäß einem der Ansprüche 1 bis 7 und mit einer Biegefestigkeit von mehr als 500 MPa im 3-Punkt-Biegeversuch.

## Claims

1. A process for the preparation of an oxide-ceramic fiber composite material, comprising the following steps:
a) calcinating an oxide-ceramic powder containing predominantly x₁ Al₂O₃ • y₁ SiO₂, wherein x₁ is a number of from 1 to 5 and y₁ is a number of from 0 to 4, at a calcination temperature that is below the melting temperature of the powder and is at least 1250 °C, while retaining a free flowing property;
b) preparing a slip having a dynamic viscosity within a range of from 10 to 150 mPa·s, containing from 65 to 80% by weight of said oxide-ceramic powder, based on the total amount of the slip, from 0.1 to 3% by weight of a liquefier, based on the total amount of the slip, and water as the balance with mix-milling;
c) infiltrating oxide-ceramic continuous fibers with the slip;
d) forming a green body as a shaped article;
e) drying the green body; and
f) sintering the green body to form the oxide-ceramic fiber composite material.

2. The process according to claim 1, **characterized in that** said oxide-ceramic powder is calcined at a temperature of at least 1300 °C.

3. The process according to any of the preceding claims, **characterized in that** a slip having a dynamic viscosity within a range of from 20 to 100 mPa·s, especially from 20 to 50 mPa·s, is employed.

4. The process according to any of the preceding claims, **characterized in that** a slip having a solids content of at least 75% by weight is employed.

5. The process according to any of the preceding claims, **characterized in that** a slip containing a liquefier in an amount of from 0.2 to 2% by weight, especially from 0.2 to 0.7% by weight, is employed.

6. The process according to any of the preceding claims, **characterized in that** a binder-free slip is employed.

7. The process according to any of the preceding claims, **characterized in that** the infiltrated continuous fibers are subjected to continuous preliminary drying in a microwave oven before the green body is formed.

8. An oxide-ceramic fiber composite material consisting of silicates, aluminum oxides, mixed phases of these substances, or mixtures of these substances, with a two-dimensional fiber orientation and a volume fiber content within a range of from 25 to 50% by volume, obtained by a process according to any of the preceding claims, and having a three-point bending strength of at least 200 MPa.

9. An oxide-ceramic fiber composite material consisting of silicates, aluminum oxides, mixed phases of these substances, or mixtures of these substances, with a one-dimensional fiber orientation and a fiber content of at least 40% by volume, obtained by a process according to any of claims 1 to 7, and having a three-point bending strength of more then 500 MPa.

## Revendications

1. Procédé pour fabriquer un matériau composite à'fibres d'oxydes céramiques, comprenant les étapes consistant à :
a) calciner une poudre d'oxydes céramiques contenant surtout x₁ Al₂O₃ • y₁ SiO₂, où x₁ est un nombre compris entre 1 et 5, et y₁ est un nombre compris entre 0 et 4, à une température de calcination qui est inférieure à la température de fusion de la poudre et est au moins 1250 °C, en retenant la propriété d'écoulement,
b) préparer une barbotine avec une viscosité dynamique comprise entre 10 et 150 mPa·s, contenant 65 à 80 % en poids de la poudre d'oxydes céramiques, par rapport à la quantité totale de la barbotine, 0,1 à 3 % en poids d'un fluidifiant, par rapport à la quantité totale de la barbotine, le reste étant de l'eau, en mélangeant/broyant,
c) infiltrer des fibres continues d'oxydes céramiques avec la barbotine,
d) former un corps vert comme corps moulé,
e) sécher le corps vert, et
f) fritter le corps vert pour former ledit matériau composite à fibres d'oxydes céramiques.

2. Procédé selon la revendication 1, **caractérisé en ce que** ladite poudre d'oxydes céramiques est calcinée à une température d'au moins 1300 °C.

3. Procédé selon l'une des revendications précédentes, **caractérisé en ce qu'**une barbotine avec une viscosité dynamique comprise entre 20 et 100 mPa·s, notamment entre 20 et 50 mPa·s, est utilisée.

4. Procédé selon l'une quelconque des revendications précédentes, **caractérisé en ce qu'**une barbotine avec une proportion de solides d'au moins 75 % en poids est utilisée.

5. Procédé selon l'une quelconque des revendications précédentes, **caractérisé en ce qu'**une barbotine contenant un fluidifiant en une quantité de 0,2 à 2 % en poids, notamment de 0,2 à 0,7 % en poids, est utilisée.

6. Procédé selon l'une quelconque des revendications précédentes, **caractérisé en ce qu'**une barbotine exempte de liants est utilisée.

7. Procédé selon l'une quelconque des revendications précédentes, **caractérisé en ce que** les fibres continues infiltrées sont préséchées dans un four micro-ondes avant la formation du corps vert.

8. Matériau composite à fibres d'oxydes céramiques en silicates, oxydes d'aluminium, phases mixtes de tels matériaux ou mélanges de tels matériaux ayant une orientation de fibres bidimensionnelle avec une teneur de fibres volumique comprise entre 25 et 50 % en volume, obtenues par un procédé selon l'une quelconque des revendications précédentes et présentant une résistance à la flexion d'au moins 200 MPa dans l'essai de pliage à 3 points.

9. Matériau composite à fibres d'oxydes céramiques en silicates, oxydes d'aluminium, phases mixtes de tels matériaux ou mélanges de tels matériaux ayant une orientation de fibres unidimensionnelle, avec une teneur de fibres d'au moins 40 % en volume, obtenues par un procédé selon l'une quelconque des revendications 1 à 7 et présentant une résistance à la flexion de plus de 500 MPa dans l'essai de pliage à 3 points.
